# EUROPEAN PATENT APPLICATION

(11) **EP 4 302 905 A1**
(43) Date of publication of application: **10.01.2024**
(21) Application number: 22183063.1
(22) Date of filing: 05.07.2022
(51) Int. Cl.: B22F 9/08, B22F 10/28, B33Y 70/00, C22C 1/04, C22C 19/05

(54) **NI-BASE SUPERALLOY**

(71) Applicant: EOS GmbH Electro Optical Systems, 82152 Krailling (DE)
(72) Inventor: SHAIKH, Abdul Shaafi, 20720 Turku (FI)
(74) Representative: Meissner Bolte Partnerschaft mbB

(57) **Abstract**

Disclosed is a specific Ni-base superalloy, preferably in powder form, comprising at least 7.00 to 24.00 wt.-% Cr, 5.00 to 20.00 wt.-% Co, 0.00 to 5.00 wt.-% Fe, 0.00 to 10.00 wt.-% W, 0.00 to 3.00 wt.-% Nb, 0.00 to 10.00 wt.-% Mo, 0.00 to 6.00 wt.-% Ti, 0.50 to 6.00 wt.-% Al, 0.00 to 9.00 wt.-% Ta, 0.00 to 0.20 wt.-% C, 0.00 to 0.20 wt.-% Zr, 0.00 to 2.00 wt.-% Hf, 0.00 to 0.50 Si wt.-% and 0.00 to 0.20 wt.-% B, wherein the balance is Ni and unavoidable impurities. Further disclosed are processes for the manufacture of such Ni-base superalloy powders, processes and devices for the manufacture of three-dimensional objects, three-dimensional objects prepared by such processes and devices and the use of such a Ni-base superalloy in powder form for minimizing and/or suppressing micro-crack formation in a three-dimensional object and/or for providing improved ductility and rupture life in creep conditions.

## Description

The invention concerns a Ni-base superalloy, preferably in powder form, comprising at least 7.00 to 24.00 wt.-% Cr, 5.00 to 20.00 wt.-% Co, 0.00 to 5.00 wt.-% Fe, 0.00 to 10.00 wt.-% W, 0.00 to 3.00 wt.-% Nb, 0.00 to 10.00 wt.-% Mo, 0.00 to 6.00 wt.-% Ti, 0.50 to 6.00 wt.-% Al, 0.00 to 9.00 wt.-% Ta, 0.00 to 0.20 wt.-% C, 0.00 to 0.20 wt.-% Zr, 0.00 to 2.00 wt.-% Hf, 0.00 to 0.50 Si wt.-% and 0.00 to 0.20 wt.-% B, wherein the balance is Ni and unavoidable impurities.

The invention further concerns processes for the manufacture of such Ni-base superalloy powders, processes and devices for the manufacture of three-dimensional objects, three-dimensional objects prepared by such processes and devices and the use of such a Ni-base superalloy in powder form for minimizing and/or suppressing micro-crack formation in a three-dimensional object and/or for providing improved ductility and rupture life in creep conditions.

A superalloy, or high-performance alloy, is usually understood as an alloy that exhibits several key characteristics: excellent mechanical strength, resistance to thermal creep deformation, good surface stability, and resistance to corrosion and/or oxidation.

A particular useful superalloy is Inconel 738LC (IN738LC). This alloy shows excellent oxidation resistance and high creep strength at elevated temperatures, which is thought to be caused by coherent γ '-precipitates present after solution heat treatment and single-step aging of the cast material. IN738LC is currently used mainly as a material for hot-gas path components in industrial gas turbines, which are typically manufactured by precision casting. Using standard manufacturing techniques, the alloy cannot be used in the "as-manufactured" condition, because the constituents thereof tend to segregate after casting and suffer from insufficient mechanical performance. Sufficient ductility and rupture life in creep conditions is especially difficult to obtain, and for IN738LC was only achieved by subjecting the cast components to complex and lengthy post processing, wherein the cast component are first subjected to a solution heat treatment, followed by an aging procedure to achieve the appropriate strength and ductility levels.

A disadvantage of the preparation of components by casting is that casting is time consuming and relatively imprecise, so that a cast component may have to be subjected to post-processing to bring the component into its final form. In addition, casting has limitations as to the forms which can be prepared, so that it may be necessary to cast certain parts of a component as a bulk material and to later machine the part from the bulk to its desired final form. Evidently, such processing is both slow and produces a lot of waste material.

An alternative to casting, which avoids these disadvantages, is additive manufacturing, which, for components which are fabricated from metals, is regularly accomplished by Direct Metal Laser Solidification also known as Laser-Powder Bed Fusion. With Direct Metal Laser Solidification (DMLS) e.g. net shape parts can be fabricated in a single process and complex parts can be produced directly from 3D-CAD models by layer-wise solidification of metal powder layers in portions of the layer corresponding to the cross-section of the three-dimensional part in the respective layer. This process is described in detail for example in Juha Kotila et al., Steel-based Metal Powder Blend for Direct Metal Laser Sintering Process, Advances in Powder Metallurgy & Particular Materials - 1999, Vol.2 Part 5, p. 87-93 and in T. Syvänen et al., New Innovations in Direct Metal Laser Sintering Process - A Step Forward in Rapid Prototyping and Manufacturing, Laser Materials Processing, Vol. 87, 1999, p. 68 to 76.

A method for producing a three-dimensional object by selective laser sintering or selective laser melting as well as an apparatus for carrying out this method are described, for example, in EP 1 762 122 A1.

Another recently developed process for the preparation of metal three-dimensional objects via additive manufacturing employs a binding agent, which is sprayed on distinct parts of a powder bed, layer by layer, to provide a preform of the three-dimensional object. This preform is subsequently sintered while at the same time the binding agent is burned off.

A problem, which is however faced when trying to implement additive manufacturing for the fabrication of components from Ni-base superalloys and IN738LC in particular, is that micro-cracks are often observed when the component is prepared which is, for example, not acceptable for sensitive parts in turbines for use in aeroplanes or power plants. Moreover, it has been observed that components fabricated from the conventional IN738LC superalloy by additive manufacturing suffer from poor ductility in creep conditions.

Thus, there is a need for modified nickel alloys and in particular a modified IN738LC superalloy, which when processed by additive manufacturing, significantly alleviates or even fully supresses the formation of micro-cracks and provides components with adequate ductility and rupture life in creep conditions.

The present application addresses these needs.

The ensuing description provides some aspects and embodiment(s) of the invention, and is not intended to limit the scope, applicability or configuration of the invention or inventions. Various changes may be made in the function and arrangement of elements without departing from the scope of the invention as set forth herein. Some aspects or embodiments may be practiced without all the specific details.

In the following detailed description, numerous specific details are set forth to provide a thorough understanding of the subject matter herein. However, it will be apparent to one of ordinary skill in the art that the subject matter may be practiced without these specific details. In other instances, well known methods, procedures, components, and systems have not been described in detail so as not to unnecessarily obscure features of the embodiments. In the following description, it should be understood that features of one aspect or embodiment may be used in combination with features from another aspect or embodiment where the features of the different embodiment are not incompatible.

It will also be understood that, although the terms first, second, etc. may be used herein to describe various elements, these elements should not be limited by these terms.

The terminology used in the description of the disclosure herein is for the purpose of describing particular embodiments only and is not intended to be limiting of the subject matter. As used in this description and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Accordingly, in a first aspect the present invention concerns a Ni-base superalloy comprising 7.00 to 24.00 wt.-% Cr, 5.00 to 20.00 wt.-% Co, 0.00 to 5.00 wt.-% Fe, 0.00 to 10.00 wt.-% W, 0.00 to 3.00 wt.-% Nb, 0.00 to 10.00 wt.-% Mo, 0.00 to 6.00 wt.-% Ti, 0.50 to 6.00 wt.-% Al, 0.00 to 9.00 wt.-% Ta, 0.00 to 0.20 wt.-% C, 0.00 to 0.20 wt.-% Zr, 0.00 to 2.00 wt.-% Hf, 0.00 to 0.50 wt.-% Si and 0.00 to 0.20 wt.-% B, wherein the balance is Ni and unavoidable impurities.

In a preferred embodiment, the present invention concerns a Ni-base superalloy comprising 7.00 to 24.00 wt.-% Cr, 5.00 to 20.00 wt.-% Co, greater than 0.00 to 5.00 wt.-% Fe, greater than 0.00 to 10.00 wt.-% W, greater than 0.00 to 3.00 wt.-% Nb, greater than 0.00 to 10.00 wt.-% Mo, greater than 0.00 to 6.00 wt.-% Ti, 0.50 to 6.00 wt.-% Al, greater than 0.00 to 9.00 wt.-% Ta, greater than 0.00 to 0.20 wt.-% C, greater than 0.00 to 0.20 wt.-% Zr, greater than 0.00 to 2.00 wt.-% Hf, greater than 0.00 to 0.50 wt.-% Si and greater than 0.00 to 0.20 wt.-% B, wherein the balance is Ni and unavoidable impurities.

In a preferred embodiment, the present invention concerns a Ni-base superalloy comprising 15.00 to 17.00 wt.-% Cr, 7.00 to 10.00 wt.-% Co, 0.00 to 1.00 wt.-% Fe, 2.00 to 3.00 wt.-% W, 0.50 to 1.50 wt.-% Nb, 1.00 to 2.50 wt.-% Mo, 2.50 to 4.00 wt.-% Ti, 2.50 to 4.00 wt.-% Al, 1.00 to 3.00 wt.-% Ta, 0.02 to 0.25 wt.-% C, 0.00 to 0.20 wt.-% Zr, 0.00 to 1.00 wt.-% Hf, 0.00 to 0.50 wt.-% Si and 0.002 to 0.20 wt.-% B, wherein the balance is Ni and unavoidable impurities.

In a preferred embodiment, the present invention concerns a Ni-base superalloy comprising 15.00 to 17.00 wt.-% Cr, 7.00 to 10.00 wt.-% Co, greater than 0.00 to 1.00 wt.-% Fe, 2.00 to 3.00 wt.-% W, 0.50 to 1.50 wt.-% Nb, 1.00 to 2.50 wt.-% Mo, 2.50 to 4.00 wt.-% Ti, 2.50 to 4.00 wt.-% Al, 1.00 to 3.00 wt.-% Ta, 0.02 to 0.25 wt.-% C, greater than 0.00 to 0.20 wt.-% Zr, greater than 0.00 to 1.00 wt.-% Hf, greater than 0.00 to 0.50 wt.-% Si and 0.002 to 0.20 wt.-% B, wherein the balance is Ni and unavoidable impurities.

In a preferred embodiment, the present invention concerns a Ni-base superalloy comprising 15.40 to 16.30 wt.-% Cr, 8.00 to 9.00 wt.-% Co, 2.40 to 2.80 wt.-% W, 0.60 to 1.2 wt.-% Nb, 1.50 to 2.00 wt.-% Mo, 3.20 to 3.70 wt.-% Ti, 3.20 to 3.70 wt.-% Al, 1.50 to 2.00 wt.-% Ta, 0.02 to 0.20 wt.-% C, 0.020 to 0.080 wt.-% Zr, greater than 0.000 to 0.20 wt.-% Si and 0.050 to 0.100 wt.-% B, wherein the balance is Ni and unavoidable impurities.

In a preferred embodiment, the present invention concerns a Ni-base superalloy comprising 15.70 to 16.30 wt.-% Cr, 8.00 to 9.00 wt.-% Co, 2.40 to 2.80 wt.-% W, 0.60 to 1.1 wt.-% Nb, 1.50 to 2.00 wt.-% Mo, 3.20 to 3.70 wt.-% Ti, 3.20 to 3.70 wt.-% Al, 1.50 to 2.00 wt.-% Ta, 0.05 to 0.15 wt.-% C, 0.0150 to 0.0300 wt.-% Zr, 0.000 to 0.10 wt.-% Si and 0.070 to 0.080 wt.-% B, wherein the balance is Ni and unavoidable impurities.

In a preferred embodiment, the present invention concerns a Ni-base superalloy comprising 15.70 to 16.30 wt.-% Cr, 8.00 to 9.00 wt.-% Co, 2.40 to 2.80 wt.-% W, 0.60 to 1.1 wt.-% Nb, 1.50 to 2.00 wt.-% Mo, 3.20 to 3.70 wt.-% Ti, 3.20 to 3.70 wt.-% Al, 1.50 to 2.00 wt.-% Ta, 0.05 to 0.15 wt.-% C, 0.0150 to 0.0300 wt.-% Zr, greater than 0.000 to 0.10 wt.-% Si and 0.070 to 0.080 wt.-% B, wherein the balance is Ni and unavoidable impurities.

The Cr content in the Ni-base superalloy according to the invention is preferably greater or equal 15.00 wt.-%, even more preferably greater or equal 15.40 wt.-% and/or preferably less or equal 17.00 wt.-%, even more preferably less or equal 16.30 wt.-%.

The Co content in the Ni-base superalloy according to the invention is preferably greater or equal 7.00 wt.-%, even more preferably greater or equal 8.00 wt.-% and/or preferably less or equal 10.00 wt.-%, even more preferably less or equal 9.00 wt.-%.

The W content in the Ni-base superalloy according to the invention is preferably greater or equal 2.00 wt.-%, even more preferably greater or equal 2.40 wt.-% and/or preferably less or equal 3.00 wt.-%, even more preferably less or equal 2.80 wt.-%.

The Nb content in the Ni-base superalloy according to the invention is preferably greater or equal 0.50 wt.-%, even more preferably greater or equal 0.60 wt.-% and/or preferably less or equal 1.50 wt.-%, even more preferably less or equal 1.20 wt.-%.

The Mo content in the Ni-base superalloy according to the invention is preferably greater or equal 1.00 wt.-%, even more preferably greater or equal 1.50 wt.-% and/or preferably less or equal 2.50 wt.-%, even more preferably less or equal 2.00 wt.-%.

The Ti content in the Ni-base superalloy according to the invention is preferably greater or equal 2.50 wt.-%, even more preferably greater or equal 3.20 wt.-% and/or preferably less or equal 4.00 wt.-%, even more preferably less or equal 3.70 wt.-%.

The Al content in the Ni-base superalloy according to the invention is preferably greater or equal 2.50 wt.-%, even more preferably greater or equal 3.20 wt.-% and/or preferably less or equal 4.00 wt.-%, even more preferably less or equal 3.70 wt.-%.

The Ta content in the Ni-base superalloy according to the invention is preferably greater or equal 1.00 wt.-%, even more preferably greater or equal 1.50 wt.-% and/or preferably less or equal 3.00 wt.-%, even more preferably less or equal 2.00 wt.-%.

The C content in the Ni-base superalloy according to the invention is preferably greater or equal 0.02 wt.-% and/or preferably less or equal 0.25 wt.-%, even more preferably less or equal 0.20 wt.-%.

The Zr content in the Ni-base superalloy according to the invention is preferably 0.00 wt.-% or greater than 0.00 wt.-%, even more preferably greater or equal 0.020 wt.-% and/or preferably less or equal 0.20 wt.-%, even more preferably less or equal 0.080 wt.-%.

The Si content in the Ni-base superalloy according to the invention is preferably 0.00 wt.-% or greater than 0.00 wt.-% and/or preferably less or equal 0.50 wt.-%, even more preferably less or equal 0.20 wt.-%.

The B content in the Ni-base superalloy according to the invention is preferably greater or equal 0.002 wt.-%, even more preferably greater or equal 0.050 wt.-% and/or preferably less or equal 0.20 wt.-%, even more preferably less or equal 0.100 wt.-%.

The Fe content in the Ni-base superalloy according to the invention is preferably 0.00 wt.-% or greater than 0.00 wt.-% and/or preferably less or equal 5.00 wt.-%, even more preferably less or equal 1.00 wt.-%.

The Hf content in the Ni-base superalloy according to the invention is preferably 0.00 wt.-% or greater than 0.00 wt.-% and/or preferably less or equal 2.00 wt.-%, even more preferably less or equal 1.00 wt.-%.

In a preferred embodiment, the Ni-base superalloy comprises less than 0.01 wt.-% P, preferably less than 0.005 wt.-% P.

In a preferred embodiment, the Ni-base superalloy comprises less than 0.0020 wt.-% S, preferably less than 0.0010 wt.-% S.

In a preferred embodiment, the Ni-base superalloy comprises less than 0.0150 wt.-%, less than 0.0100 wt.-% N.

In a preferred embodiment, the Ni-base superalloy comprises less than 0.0200 wt.-% O, preferably less than 0.0150 wt.-% O.

Preferably, the inventive Ni-base superalloy does not comprise non-metal elements except for those discussed above (i.e. C, B and Si) such as N, O, P or S in amounts (of the respective element) of more than 100 ppmw (parts per million by weight). Preferably, the amount of each of N, O, P or S in the inventive Ni-base superalloy is less than 50 ppmw and for O and S even more preferably less than 25 ppmw.

In a preferred embodiment, the Ni-base superalloy comprises 0.070 to 0.080 wt.-% B, preferably 0.072 to 0.074 wt.-% B.

Without being bound to that theory it can be hypothesized that an amount of B as described above in the context of the inventive Ni-base superalloy significantly alleviates or even fully supresses the formation of micro-cracks and provides components with adequate ductility and rupture life in creep conditions.

In a preferred embodiment, the Ni-base superalloy is in powder form and has a particle size d50 of from 5 to 100 µm, preferably at least 20 µm and/or 40 µm or less as determined according to laser diffraction and/or dynamic image analysis using procedures described in ISO 13320:2020.

These particle sizes are particularly suitable for processing via additive manufacturing and in particular a laser sintering or laser melting process.

The d50 designates the size where the amount of the particles by weight, which have a smaller diameter than the size indicated, is 50% of a sample's mass.

In one preferred embodiment of the invention, the particles of the Ni-base superalloy in powder form are substantially spherical. In another preferred embodiment, the particles of the Ni-base superalloy in powder form are substantially irregular.

With regard to the above alloys, it is particularly preferred that the nickel accounts for the balance to 99 wt.-% with all other metal ingredients of the respective alloy as mentioned above (i.e. at most 1 wt.-% is other undefined elements), with an amount to the balance of 99.5 wt.-% or even to the balance of 100 wt.-% being even more preferred. Alternatively, the metal alloy, which is described above with the indication "comprising" is also described herein as a metal alloy which "consists of" the indicated elements, except for unavoidable impurities.

The process for the production of a nickel alloy in powder form according to a second aspect of the invention is a process for the production of a nickel alloy in powder form, particular for use in the manufacture of a three-dimensional object by means of an additive manufacturing method.

The Ni-base superalloy in powder form of the present invention can be prepared by any method known to those skilled in the art of preparing powdered alloys. A particularly convenient method involves atomizing the liquid Ni-base superalloy, wherein the Ni-base superalloy is molten and then atomized in an appropriate device, such as vacuum inert gas atomization, plasma atomization or electrode induction melting gas atomization. For atomization, the Ni-base superalloy should have a temperature of >1000°C, preferably >1200°C and more preferably >1250°C. Temperatures of more than 1500°C are not required for the atomization and due to the higher energy requirements less useful.

In particular preferred is a process for the preparation of a Ni-base superalloy in powder form as defined above, wherein a molten Ni-base superalloy having a composition as also defined above is atomized in vacuum inert gas atomization, plasma atomization or electrode induction melting gas atomization.

The instant invention also concerns a Ni-base superalloy in powder form obtainable by the method as described above.

In a third aspect, the present invention concerns the use of a Ni-base superalloy as described above or obtained by the process as described above for minimizing and/or suppressing crack formation in a three-dimensional object and/or for providing improved ductility and rupture life in creep conditions of the three-dimensional object, wherein the three-dimensional object is prepared in a process involving the step- and layerwise build-up of the three-dimensional object, preferably by laser powder bed fusion.

In a fourth aspect, the present invention concerns a process for the manufacture of a three-dimensional object, comprising a Ni-base superalloy as described above or obtained by the process as described above, and preparing the object by applying the Ni-base superalloy layer, in particular in powder form, on layer and selectively solidifying the powder, in particular by application of electromagnetic radiation, at positions in each layer, which correspond to the cross section of the object in this layer, wherein the positions are scanned with an interaction zone, in particular with a radiation interaction zone of an energy beam bundle.

Regarding the fourth aspect, it is noted that the terms "Ni-base superalloy" and "nickel alloy Ni-base superalloy in powder form" are used interchangeably.

In a preferred embodiment of the inventive process, the solidification is achieved by application of electromagnetic radiation, at positions in each layer, which correspond to the cross section of the object in this layer, wherein the positions are scanned with an interaction zone, in particular with a radiation interaction zone of an energy beam bundle. However, also contemplated are processes where a pre-form of the three-dimensional object is prepared by applying a binding agent to predetermined parts of a powder bed, layer by layer, and wherein the preform is subsequently solidified by sintering in an oven or similar equipment. It is also possible to directly apply the powder layer on the preform.

In the context of the above, the term "solidifying" means that the powder is consolidated from a free flowing powder to a compact body or object. Alternatively, the term "solidifying" includes the melting of the powder in the interaction zone, followed by cooling or re-solidifying, respectively.

The three-dimensional object may be an object of a single material (i.e. the inventive Ni-base superalloy) or an object of different materials. If the three-dimensional object is an object of different materials, this object can be produced, for example, by applying the nickel alloy powder of the invention, for example, to a base body or pre-form of the other material.

In the process of the fourth aspect, the temperature may suitably be adapted. Thus, in the context of the inventive process, it may be expedient if the Ni-base superalloy of the invention is heated, suitably via heating of the building platform to which the powder mixture is applied, prior to solidifying, with a heating to a temperature of at least 100°C being preferred, preheating to a temperature of at least 130°C being more preferred, and preheating to a temperature of at least 150°C may be specified as still more preferred. On the other hand, preheating to very high temperatures places considerable demands on the apparatus for producing the three-dimensional objects, i.e. at least to the container in which the three-dimensional object is formed, so that as a meaningful maximum temperature for the preheating a temperature of 300°C or less can be specified. Preferably, the maximum temperature for preheating is 250°C or less, more preferably 220°C or less and even more preferably 200°C or less. The temperatures given for preheating each indicate the temperature to which the building platform to which the powder mixture is applied and by which the powder bed formed by the powder mixture is heated. In an alternative embodiment of the second aspect, the nickel alloy powder of the invention is not heated, and the process is conducted at ambient temperature (20±5°C).

In the process of the fourth aspect, it has in addition been found that a heat treatment of the three-dimensional object may significantly improve the physical characteristics thereof. Possibly, this effect is due to rearrangements in the microstructure in the alloy of the three-dimensional object initially formed. To this end, the inventive process preferably further includes a step of subjecting the three-dimensional object initially prepared to a heat treatment, preferably at a temperature from 950°C to 1250°C, and/or for a time of 3 to 15 h. As particularly preferred temperature, a temperature of at least 1000 °C and/or 1200 °C or less can be mentioned. Particularly preferred time frames for the heat treatment are at least 3.5 h and/or 12 h or less and especially at least 4 h and/or 10 h or less.

In one particular preferred embodiment the three-dimensional object is subjected to a four step heat treatment at about 1200°C for about 4 h, followed by about 24 h at about 850°C. In another particular preferred embodiment the three-dimensional object is subjected to a two-step heat treatment at about 1120°C for about 4h followed by about 16 h at about 850°C. Preferably, after each of the heat treatment steps the three-dimensional object is subjected to cooling by pressurized inert gas at a rate equivalent to cooling in still air at ambient temperature.

For the inventive process, it is further preferred that the individual layers, which are subsequently subjected at least in part to treatment with electromagnetic radiation, are applied at a thickness of 10 µm or more, preferably 20 µm or more and more preferably 30 µm or more. Alternatively or cumulatively, the layers are applied at a thickness of preferably 100 µm or less, more preferably 80 µm or less and even more preferably 60 µm or less. In a most preferred embodiment the thickness, in which the layers are applied is in the range of 10 to 100 µm.

In a fifth aspect, the present invention concerns a three-dimensional object prepared using Ni-base superalloy, in particular prepared according to the process as described above, wherein the Ni-base superalloy is preferably a Ni-base superalloy in powder form as described above or obtained by the process as described above and wherein the three-dimensional object comprises or consists of such a Ni-base superalloy.

The three-dimensional object may comprise or consist of the nickel alloy as described above and has, for example, reduced or no micro-cracks compared to the same three-dimensional object, which is prepared with a nickel alloy of the prior art.

In a preferred embodiment, the three-dimensional object is a component for use in gas turbine engines such a ring segment, guide vane, or turbine blade, or other turbomachinery such as turbochargers.

For the three-dimensional object of the above aspect, it is preferred that it has a relative density of 98% or more, preferably 99% or more and more preferably 99.5 % or more, wherein the relative density is defined as the ratio of the measured density and the theoretical density of the same alloy. The measured density is the density of the three-dimensional object as determined by the Archimedes Principle according to ISO 3369:2006. The theoretical density can e.g. be determined from a test body of the same alloy, which has been prepared by casting.

Other features and embodiments of the invention are provided in the following description of an exemplary embodiment taking account of the appended figures.
Figure 1 shows the high temperature tensile properties at temperatures of 750°C, 850°C and 980°C. The standard IN738LC refers to an alloy of the prior art, the modified IN738LC refers to an alloy according to the instant invention.
Figure 2 shows the creep performance at 760°C, 850°C, and 982°C. The standard IN738LC refers to an alloy of the prior art, the modified IN738LC refers to an alloy according to the instant invention.
Figure 3 shows micrographs of crosscuts of test bodies prepared from non-inventive and inventive alloys.

In the following, the present invention is further illustrated by mean of examples, which however should not be construed as limiting the invention thereto in any manner.

### Examples

A Ni-base superalloy according to the invention with the composition 15.90 wt.-% Cr, 8.40 wt.-% Co, 2.60 wt.-% W, 0.80 wt.-% Nb, 1.90 wt.-% Mo, 3.40 wt.-% Ti, 3.50 wt.-% Al, 1.70 wt.-% Ta, 0.121 wt.-% C, 0.0200 wt.-% Zr, 0.0770 wt.-% B, 0.040 wt.-% Si, <0.0050 wt.-% P, < 0.0010 wt.-% S, 0.0040 wt.-% N, 0.0090 wt.-% O with the balance being Ni was prepared.

Further, a Ni-base alloy corresponding to IN738LC (reference alloy) with the composition 15.90 wt.-% Cr, 8.50 wt.-% Co, 2.50 wt.-% W, 0.88 wt.-% Nb, 1.70 wt.-% Mo, 3.50 wt.-% Ti, 3.50 wt.-% Al, 1.80 wt.-% Ta, 0.100 wt.-% C, 0.0240 wt.-% Zr, 0.0070 wt.-% B, 0.02 wt.-% Si, <0.005 wt.-% P, 0.0080 wt.-% N, 0.0170 wt.-% O with the balance being Ni was prepared.

From each of the inventive alloy and from the reference alloy test bodies were prepared in the shape of cylinders of 100 mm in length and 12 mm in diameter.

The thus prepared test bodies were investigated for their mechanical properties in tensile stregth in accordance with ISO 6892-2:2018, and for their stress rupture performance in accordance with ASTM E139.

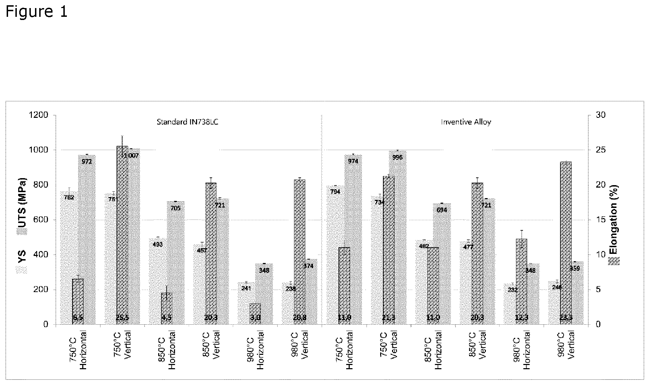

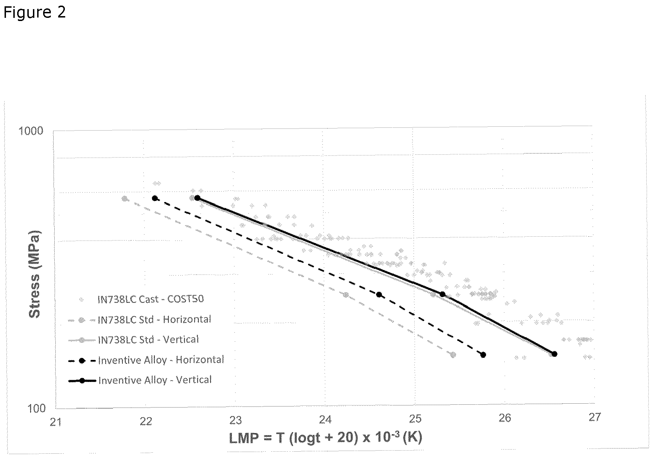

The results are summarized in Figures 1 and 2.

The analyses of the mechanical properties show that the modified alloy of the invention shows similar strength as the standard alloy, but better elongation especially in the horizontal orientation.

The analyses of the mechanical properties further show that the creep performance of modified IN738LC is better than standard IN738LC in both orientations, especially in the horizontal orientation.

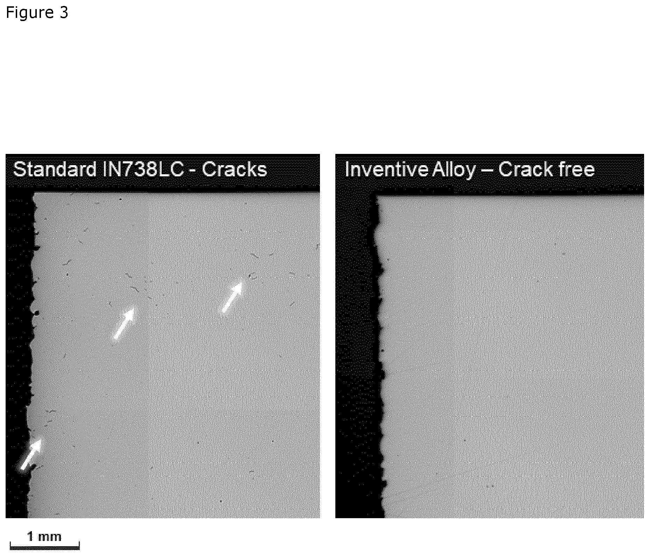

In micrographs (Figure 3) of crosscuts of test bodies prepared from non-inventive samples a number of microcracks could be observed, which were not present in crosscuts of corresponding test bodies prepared from inventive samples.

## Claims

1. Ni-base superalloy comprising
7.00 to 24.00 wt.-% Cr,
5.00 to 20.00 wt.-% Co,
0.00 to 5.00 wt.-% Fe,
0.00 to 10.00 wt.-% W,
0.00 to 3.00 wt.-% Nb,
0.00 to 10.00 wt.-% Mo,
0.00 to 6.00 wt.-% Ti,
0.50 to 6.00 wt.-% Al,
0.00 to 9.00 wt.-% Ta,
0.00 to 0.20 wt.-% C,
0.00 to 0.20 wt.-% Zr,
0.00 to 2.00 wt.-% Hf,
0.00 to 0.50 Si wt.-% and
0.00 to 0.20 wt.-% B,
wherein the balance is Ni and unavoidable impurities.

2. Ni-base superalloy according to claim 1, comprising
15.00 to 17.00 wt.-% Cr,
7.00 to 10.00 wt.-% Co,
0.00 to 1.00 wt.-% Fe,
2.00 to 3.00 wt.-% W,
0.50 to 1.50 wt.-% Nb,
1.00 to 2.50 wt.-% Mo,
2.50 to 4.00 wt.-% Ti,
2.50 to 4.00 wt.-% Al,
1.00 to 3.00 wt.-% Ta,
0.02 to 0.25 wt.-% C,
0.00 to 0.20 wt.-% Zr,
0.00 to 1.00 wt.-% Hf,
0.00 to 0.50 wt.-% Si and
0.002 to 0.20 wt.-% B,
wherein the balance is Ni and unavoidable impurities.

3. Ni-base superalloy according to any of the preceding claims, comprising
15.40 to 16.30 wt.-% Cr,
8.00 to 9.00 wt.-% Co,
2.40 to 2.80 wt.-% W,
0.60 to 1.2 wt.-% Nb,
1.50 to 2.00 wt.-% Mo,
3.20 to 3.70 wt.-% Ti,
3.20 to 3.70 wt.-% Al,
1.50 to 2.00 wt.-% Ta,
0.02 to 0.20 wt.-% C,
0.020 to 0.080 wt.-% Zr,
0.000 to 0.20 wt.-% Si and
0.050 to 0.100 wt.-% B,
wherein the balance is Ni and unavoidable impurities.

4. Ni-base superalloy according to any of the preceding claims, comprising
15.70 to 16.30 wt.-% Cr,
8.00 to 9.00 wt.-% Co,
2.40 to 2.80 wt.-% W,
0.60 to 1.1 wt.-% Nb,
1.50 to 2.00 wt.-% Mo,
3.20 to 3.70 wt.-% Ti,
3.20 to 3.70 wt.-% Al,
1.50 to 2.00 wt.-% Ta,
0.05 to 0.15 wt.-% C,
0.0150 to 0.0300 wt.-% Zr,
0.000 to 0.10 wt.-% Si and
0.070 to 0.080 wt.-% B,
wherein the balance is Ni and unavoidable impurities.

5. Ni-base superalloy according to any of the preceding claims, comprising less than 0.01 wt.-% P, preferably less than 0.005 wt.-% P.

6. Ni-base superalloy according to any of the preceding claims, comprising less than 0.0020 wt.-% S, preferably less than 0.0010 wt.-% S.

7. Ni-base superalloy according to any of the preceding claims, comprising less than 0.0150 wt.-%, less than 0.0100 wt.-% N.

8. Ni-base superalloy according to any of the preceding claims, comprising less than 0,0200 wt.-% O, preferably less than 0.0150 wt.-% O.

9. Ni-base superalloy according to any of the preceding claims, comprising 0.070 to 0.080 wt.-% B, preferably 0.072 to 0.074 wt.-% B.

10. Ni-base superalloy according to any of the preceding claims, wherein the Ni-base superalloy is in powder form and has a particle size d50 of from 5 to 100 µm, preferably from 20 to 40 µm as determined according to laser diffraction and/or dynamic image analysis performed as per ISO 13320:2020.

11. Process for the preparation of a Ni-base superalloy in powder form according to claim 10, wherein a molten Ni-base superalloy having a composition as defined in any one of claims 1 to 9 is atomized in vacuum inert gas atomization, plasma atomization or electrode induction melting gas atomization.

12. Use of a Ni-base superalloy according to claims 1 to 10 or obtained by the process according to claim 11 for minimizing and/or suppressing crack formation in a three-dimensional object and/or for providing improved ductility and rupture life in creep conditions of the three-dimensional object, wherein the three-dimensional object is prepared in a process involving the step- and layerwise build-up of the three-dimensional object, preferably by laser powder bed fusion.

13. Process for the manufacture of a three-dimensional object, comprising a Ni-base superalloy according to claims 1 to 10 or obtained by the process according to claim 11, and preparing the object by applying the Ni-base superalloy layer on layer and selectively solidifying the powder, in particular by application of electromagnetic radiation, at positions in each layer, which correspond to the cross section of the object in this layer, wherein the positions are scanned with an interaction zone, in particular with a radiation interaction zone of an energy beam bundle.

14. Three-dimensional object prepared using Ni-base superalloy, in particular prepared according to the process as described in claim 13, wherein the Ni-base superalloy is a Ni-base superalloy in powder form according to any one of claims 1 to 10 or obtained by the process according to claim 11 and wherein the three-dimensional object comprises or consists of such a Ni-base superalloy.
